Europäisches Patentamt

European Patent Office

Office européen des brevets

(19)

(11) Veröffentlichungsnummer: **0 019 611**
**B1**

(12) # EUROPÄISCHE PATENTSCHRIFT

(45) Veröffentlichungstag der Patentschrift:
**06.04.83**

(21) Anmeldenummer: **80890053.4**

(22) Anmeldetag: **13.05.80**

(51) Int. Cl.³: **H 02 G 15/113**

(54) **Kabelmuffe für elektrische Leitungen.**

(30) Priorität: **17.05.79 AT 3666/79**

(43) Veröffentlichungstag der Anmeldung:
**26.11.80 Patentblatt 80/24**

(45) Bekanntmachung des Hinweises auf die Patenterteilung:
**06.04.83 Patentblatt 83/14**

(84) Benannte Vertragsstaaten:
**BE CH DE FR GB IT LI LU NL SE**

(56) Entgegenhaltungen:
**CH-A-533 919**
**DE-A-2 060 817**
**DE-A-2 332 917**
**DE-A-2 333 163**
**DE-A-2 626 200**
**FR-A-1 556 683**
**FR-A-2 069 268**
**FR-A-2 194 062**
**FR-A-2 301 119**
**NL-A-7 512 945**

(73) Patentinhaber: **Laha, Manfred, Grosse Stadtgutgasse 18, A-1020 Wien II (AT)**

(72) Erfinder: **Laha, Manfred, Grosse Stadtgutgasse 18, A-1020 Wien II (AT)**

(74) Vertreter: **Krause, Ernst, Dipl.-Ing. et al, Dipl.- Ing. Krause Ernst Dipl. Ing. Casati Wilhelm Patentanwälte Amerlingstrasse 8, A-1061 Wien (AT)**

Kabelmuffe für elektrische Leitungen

Die Erfindung bezieht sich auf eine Kabelmuffe für elektrische Leitungen, bestehend aus zwei zusammensetzbaren und miteinander verbindbaren, untereinander gleich ausgebildeten Halbschalen aus steifem Kunststoff, deren Hohlraum die Kabelenden und deren Verbindungsstücke sowie eine Giessmasse aufnimmt, wobei in der Mitte jeder Halbschale ein mit einer Sollbruchstelle versehener Deckel vorgesehen ist, durch dessen Entfernung eine Eingiessöffnung für die Giessmasse gebildet ist. Solche Kabelmuffen werden für Nachrichtenkabel und Stromkabel in verschiedenen Spannungsbereichen eingesetzt.

Aus der NL-A-7512 945 ist eine Kabelmuffe dieser Art bekannt, bei der die aus thermoplastischem Schaumkunststoff bestehenden Halbschalen an ihren Verbindungsflanschen mit einer Nut-Rippenkonstruktion versehen sind, in der ein besonderes Dichtungsmittel, insbesondere eine plastische Dichtmasse oder ein solches Band, eingeklemmt wird. Das Ausgiessen erfolgt dabei mit einer Schaumkunststoffgiessmasse.

Aus der FR-A-20 69 268 ist es bekannt, in den einander gegenüberliegenden Randteilen der Halbschalen einer Kabelmuffe Ausnehmungen vorzusehen, in die Dichtungsschnüre einlegbar sind.

Das Ausgiessen einer Kabelmuffe mit einem Schaumkunststoff, durch eine im Kabelmantel vorgesehene Öffnung hindurch, ist z.B. aus der FR-A-15 56 683 bekannt.

Aus der DE-A-2 626 200 ist ein zweiteiliges Gehäuse für eine Kabelmuffe bekannt, wobei jeder rinnenförmige Gehäuseteil als ein einteiliges Kunststoffwerkstück ausgebildet ist und das Gehäuse, wenn zusammengesetzt, die Form eines geraden Prismas mit Sechseckquerschnitt aufweist.

Ausgehend von der eingangs erwähnten NL-A-7512 945 stellt sich die Erfindung die Aufgabe, eine Kabelmuffe zu schaffen, die besonders einfach herzustellen und handzuhaben ist und keine besonderen Dichtungsmittel in den Verbindungsflanschen benötigt.

Die Erfindung sieht zur Lösung dieser Aufgabe vor, dass jede Halbschale sowohl bezüglich ihrer Mittenlängsebene als auch bezüglich ihrer Mittenquerebene symmetrisch ausgebildet ist, dass als Giessmasse ein den Hohlraum füllender, aufschäumender Kunststoff vorgesehen ist, dass die einander zugekehrten Ränder der Halbschalen durch Anschläge im Abstand voneinander gehalten sind, um einen Austritt des vollausschäumenden Kunststoffes zuzulassen, und dass vorzugsweise in an sich bekannter Weise die zusammengesetzten Halbschalen die Form eines geraden Prismas mit Sechseckquerschnitt aufweisen. Auf diese Weise wird erreicht, dass die Herstellung des Formwerkzeuges und die Handhabung der Halbschalen wesentlich vereinfacht wird; ausserdem kann an der jeweils oberen Halbschale der Deckel leicht entfernt werden, worauf entlang der einander gegenüberliegenden Ränder der Halbschalen eine leichte Kontrolle des Vollausschäumens ermöglicht ist.

Weitere Einzelheiten und Vorteile der Erfindung ergeben sich aus der folgenden Beschreibung eines Ausführungsbeispieles anhand der Zeichnung; es zeigt:

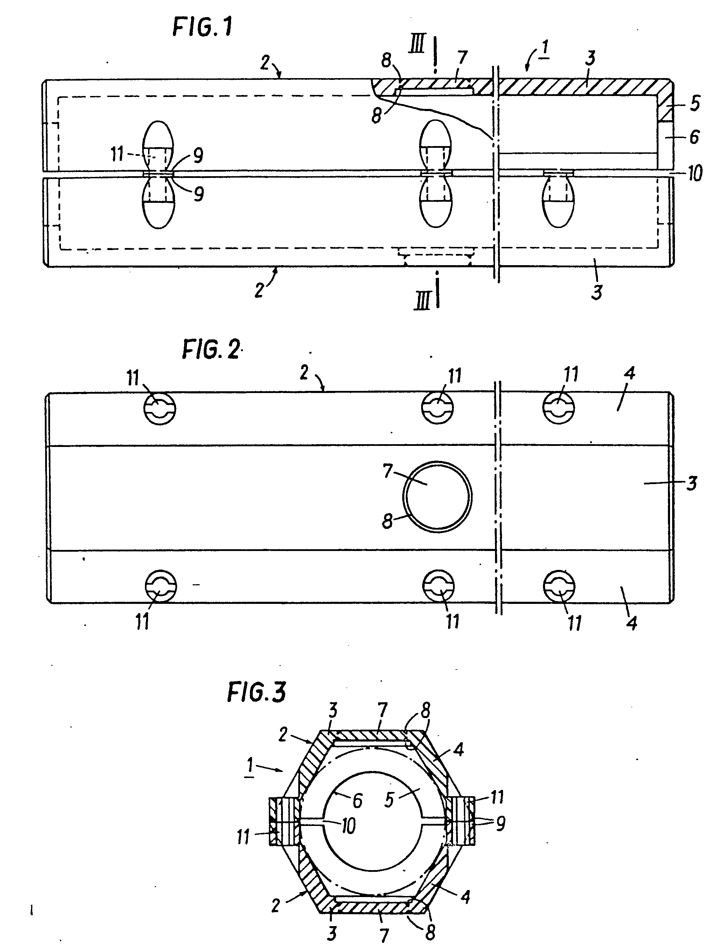

Fig. 1 eine Seitenansicht der aus zwei Halbschalen bestehenden Kabelmuffe,

Fig. 2 eine Draufsicht auf eine ihrer Halbschalen, und

Fig. 3 einen Schnitt nach der Linie III-III der Fig. 1.

Wie dargestellt, ist die Kabelmuffe 1 aus beiden Halbschalen 2 je in Form eines halben, geraden Prismas mit Sechseckquerschnitt zusammengesetzt; jede Halbschale weist somit eine obere bzw. untere Mittellängswand 3, zwei seitlich benachbarte Seitenlängswände 4 und zwei Endstirnwände 5 mit je einer halbkreisförmigen Ausnehmung 6 auf, die zur Aufnahme von an sich bekannten (nicht dargestellten) konischen Einfach- oder Doppelführungsstutzen für die (ebenfalls nicht dargestellten) Kabelenden dient.

Die Mittellängswand 3 besitzt in ihrer Mitte einen Deckel 7, der durch eine kreisförmige, eine Sollbruchstelle bildende Doppelnut 8 begrenzt ist, so dass nach dem Ausbrechen und Entfernen dieses Deckels 7 an der jeweils oberen Halbschale 2 der Kabelmuffe 1 eine Kreisöffnung entsteht, durch die der Schaumkunststoff in den Hohlraum der Kabelmuffe eingegossen werden und sich darin gleichmässig verteilen kann.

Entlang der einander zugekehrten, flanschartig ausgebildeten Umfangsränder jeder Halbschale 2 der Kabelmuffe 1 sind nach unten bzw. oben vorstehende Anschläge 9 ausgebildet, die beim Zusammenbau der Halbschalen aufeinander zu liegen kommen, sodass neben den Anschlägen diese Ränder zwischen sich einen Spalt 10 freilassen, durch den beim Aufschäumen des Kunststoffes im Hohlraum der Halbschalen 2 überschüssiger Schaumstoff auszutreten vermag, wodurch eine leichte Kontrolle der Vollschäumung möglich ist.

Die Verbindung der Halbschalen erfolgt zweckmässig mittels (nicht dargestellten) Querzapfen-Kopfbolzen, die in entsprechende, miteinander fluchtende Ausnehmungen 11 der flanschartigen Ränder der Halbschalen 2 einsetzbar und dann durch Drehung um 90° verriegelbar sind.

Wie aus der Anordnung und Gestaltung der Halbschalen erkenntlich, sind diese nicht nur untereinander gleich ausgebildet, sondern es ist jede auch zu ihrer Mittellängs- und Querebene symmetrisch ausgebildet; in dieser Weise wird eine Kabelmuffe erhalten, die auch bezüglich der Berührungsebene der Halbschalen symmetrisch, also insgesamt axial symmetrisch bezüglich ihrer Längsachse ausgebildet ist, was die Herstellung der Formwerkzeuge und die Handhabung wesentlich erleichtert.

Die erfindungsgemäss ausgebildeten Kabelmuffentypen sind nicht nur im Telefoniebereich, also bei Kleinst- und Kleinspannungen, sondern in allen Spannungsbereichen, d.h. bis zur Nieder-, Mittel- und Hochspannung einsetzbar.

### Patentansprüche

Kabelmuffe (1) für elektrische Leitungen, bestehend aus zwei zusammensetzbaren und miteinander verbindbaren, untereinander gleich ausgebildeten Halbschalen (2) aus steifem Kunststoff, deren Hohlraum die Kabelenden und deren Verbindungsstücke sowie eine Giessmasse aufnimmt, wobei in der Mitte jeder Halbschale (2) ein mit einer Sollbruchstelle (8) versehener Deckel (7) vorgesehen ist, durch dessen Entfernung eine Eingiessöffnung für die Giessmasse gebildet ist, dadurch gekennzeichnet, dass jede Halbschale (2) sowohl bezüglich ihrer Mittenlängsebene als auch bezüglich ihrer Mittenquerebene symmetrisch ausgebildet ist, dass als Giessmasse ein den Hohlraum füllender, aufschäumender Kunststoff vorgesehen ist, dass die einander zugekehrten Ränder der Halbschalen (2) durch Anschläge (9) im Abstand voneinander gehalten sind, um einen Austritt des vollausschäumenden Kunststoffes zuzulassen, und dass vorzugsweise in an sich bekannter Weise die zusammengesetzten Halbschalen (2) die Form eines geraden Prismas mit Sechseckquerschnitt aufweisen.

### Claims

Cable sleeve (1) for electric conduits, consisting of two dismountable and mutually connectable, mutually identically formed half-shells (2) of rigid plastic material whose cavity receives the cable ends and their connecting pieces as well as a casting mass, the center of each half-shell (2) being provided with a lid (7) having a rated break point (8) by whose removal a pouring orifice for the casting mass is formed, characterized in that each half-shell (2) is shaped symmetrically in respect of its central longitudinal plane as well as its central transversal plane, that the casting mass provided is a foaming material filling up the cavity, that the mutually facing rims of the half-shells (2) are kept spaced in respect of one another by means of stops (9) in order to permit the discharge of the fully foaming (blowing) material and that, preferably, in a manner known per se, the assembled half-shells (2) have the form of a linear prism of hexagonal cross-section.

### Revendications

Manchon de câble (1) pour lignes électriques, constitué par deux demi-coquilles (2) en matière plastique rigide, qui ont une configuration identique et peuvent être assemblées et liées l'une à l'autre, et dont la cavité reçoit les extrémités de câble et leurs éléments de liaison, ainsi qu'une masse coulée, un couvercle (7) muni d'une amorce de rupture (8) étant prévu au milieu de chaque demi-coquille (2), couvercle dont l'enlèvement ménage une ouverture de coulée pour la masse, caractérisé en ce que chaque demi-coquille (2) a une configuration symétrique par rapport à ses plans médians, tant longitudinal que transversal, en ce que la masse coulée est une matière plastique qui mousse et remplit la cavité, en ce que les bords respectif tournés l'un vers l'autre des demi-coquilles (2) sont maintenus à distance l'un de l'autre par des butées (9) pour laisser sortir la matière plastique qui finit de mousser et en ce que, de préférence, de façon connue en soi, les demi-coquilles (2) assemblées ont la forme d'un prisme droit de section hexagonale.

FIG.1

FIG.2

FIG.3